# EUROPEAN PATENT APPLICATION

(11) **EP 4 726 110 A1**
(43) Date of publication of application: **15.04.2026**
(21) Application number: 25204518.2
(22) Date of filing: 25.09.2025
(51) Int. Cl.: E02F 3/32, E02F 9/08, E02F 9/20

(54) **WORK MACHINE**

(30) Priority: 10.10.2024 JP 2024178335
(71) Applicant: Yanmar Holdings Co., Ltd., Osaka-shi, Osaka (JP)
(72) Inventor: KITAHARA, Satoshi, Fukuoka (JP)
(74) Representative: Novagraaf International SA

(57) **Abstract**

[Problem] To provide a work machine capable of efficiently taking in air from a ventilation portion having high durability.

[Solution] A work machine 100 includes a hood 1, a ventilation portion 2, and a fan 31. The hood 1 surrounds a machine body 404. The ventilation portion 2 is formed in the hood 1 and connects an inside and an outside of the machine body 404. The fan 31 is disposed in the machine body 404 and takes in outside air via the ventilation portion 2. The ventilation portion 2 includes a circular opening portion 21 and an inner wall portion 22. The inner wall portion 22 extends from an outer surface of the hood 1 toward an outer edge of the opening portion 21 and surrounds at least a portion of the outer edge of the opening portion 21.

## Description

### TECHNICAL FIELD

The present invention relates to a work machine.

### BACKGROUND ART

Conventionally, a work machine that air-cools an inside of an engine room has been known. For example, in the electric excavator of Patent Document 1, a cooling fan disposed in a machine room (i.e., an engine room) covered with an exterior cover (so-called hood) is driven to take air into the machine room from a vent hole formed in a side portion of the exterior cover.

### PRIOR ART DOCUMENT

### PATENT DOCUMENT

Patent Document 1: Japanese Unexamined Patent Application Publication No. 2023-020294

### SUMMARY OF INVENTION

### TECHNICAL PROBLEM

However, in a small work machine, a fan, a heat exchanger, and the like are disposed in a narrow space in an engine room, and thus external air needs to be efficiently taken in from a vent hole. In particular, in an electric hydraulic excavator, it is necessary to cool a power electronic device that drives a hydraulic oil pump with cooling water or the like, and at the same time, to cool hydraulic oil discharged from a hydraulic oil pump. Therefore, efficient air intake at the vent hole is of significant importance. On the other hand, in the work machine during work, an obstacle may come into contact with a hood including the vent hole. At this time, when the vent hole is deformed, air intake efficiency may be deteriorated.

The present invention has been made in consideration of the above situation, and an object of the present invention is to provide a work machine capable of efficiently taking in air from a ventilation portion having high durability.

### SOLUTION TO PROBLEM

To achieve the object described above, a work machine according to an aspect of the present invention includes a hood, a ventilation portion, and a fan. The hood surrounds a machine body. The ventilation portion is formed in the hood and connects an inside and an outside of the machine body. The fan is disposed in the machine body and takes in outside air via the ventilation portion. The ventilation portion has an opening portion of a circular shape and an inner wall portion. The inner wall portion extends from an outer surface of the hood toward an outer edge of the opening portion and surrounds at least a portion of the outer edge of the opening portion.

Further features and advantages of the present invention will become clearer from the following embodiment.

### ADVANTAGEOUS EFFECTS OF INVENTION

The present invention can provide a work machine that can efficiently take in air from a ventilation portion having high durability.

### BRIEF DESCRIPTION OF DRAWINGS

FIG. 1 is a left side view schematically illustrating an example of a configuration of a hydraulic excavator according to an embodiment.
FIG. 2 is a block diagram schematically illustrating a configuration of an electrical system and a hydraulic system of the hydraulic excavator.
FIG. 3 is a horizontal cross-sectional view illustrating a configuration of an interior of an engine room of the hydraulic excavator.

### DESCRIPTION OF EMBODIMENTS

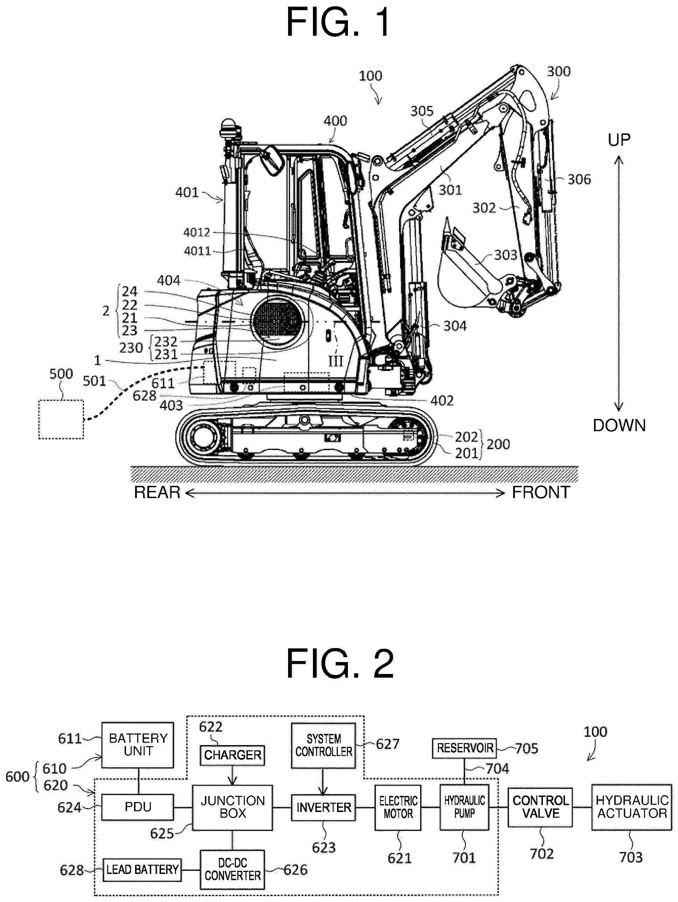

An embodiment of the present invention will be described below with reference to the drawings. FIG. 1 is a side view schematically illustrating an example of a configuration of a hydraulic excavator 100 according to the embodiment. FIG. 2 is a block diagram schematically illustrating a configuration of an electrical system and a hydraulic system of the hydraulic excavator 100. The hydraulic excavator 100 is an example of the "work machine" of the present invention.

### 1. Hydraulic Excavator 100

The hydraulic excavator 100 includes a lower traveling body 200, a work machine 300, and an upper swiveling body 400. In this embodiment, the upper swiveling body 400 (particularly, an engine room 404 described below) may be generically referred to as a "machine body".

Note that directions in the present disclosure are defined as follows. First, in the upper swiveling body 400, a direction from one of a front side and a rear side of a driver's seat 4011, which will be described below, on which an operator (pilot or driver) is seated toward the other is referred to as a "front-rear direction". In the "front-rear direction", a direction from the rear side to the front side of the driver's seat 4011 is referred to as "front", and a direction from the front side to the rear side of the driver's seat 4011 is referred to as "rear". Therefore, in a non-swiveling state of the upper swiveling body 400 (swiveling angle is zero degree) relative to the lower traveling body 200, the front-rear direction of the upper swiveling body 400 coincides with a direction in which the lower traveling body 200 moves forward and rearward. Furthermore, in a state where the front is viewed from the rear side, a direction from one of the left side and the right side of the driver's seat 4011 toward the other is referred to as a "left-right direction". In the left-right direction, a direction toward the left side of the driver's seat 4011 is referred to as "left", and a direction toward the right side of the driver's seat 4011 is referred to as "right". A direction from one of the lower traveling body 200 and the upper swiveling body 400 toward the other is referred to as an "up-down direction". In the up-down direction, a direction from the lower traveling body 200 toward the upper swiveling body 400 is referred to as "upper", and a direction from the upper swiveling body 400 toward the lower traveling body 200 is referred to as "lower". Therefore, when the hydraulic excavator 100 is disposed on a horizontal plane having a vertical direction as a normal direction, the up-down direction of the hydraulic excavator 100 coincides with the vertical direction. Furthermore, an upper side corresponds to a vertically upper side, and a lower side corresponds to a vertically lower side. The front-rear direction, the left-right direction, and the up-down direction are perpendicular to each other. These directions are names used merely for the description and are not intended to limit actual positional relationships or directions.

### 1-1. Lower Traveling Body 200

The lower traveling body 200 includes a pair of left and right crawlers 201 and a pair of left and right traveling motors 202. The individual traveling motors 202 are hydraulic motors. The left and right traveling motors 202 drive the left and right crawlers 201, respectively, to move the hydraulic excavator 100 forward and rearward.

### 1-2. Work Machine 300

The work machine 300 includes a boom 301, an arm 302, and a bucket 303. The boom 301, the arm 302, and the bucket 303 can be independently driven, thereby enabling to perform excavation work of earth, sand, and the like. The boom 301 pivots by means of a boom cylinder 304. The boom cylinder 304 has a base end portion supported by a front portion of the upper swiveling body 400, and is freely movable in an extendable and retractable manner. The arm 302 pivots by means of an arm cylinder 305. The arm cylinder 305 has a base end portion supported by the boom 301, and is freely movable in an extendable and retractable manner. The bucket 303 pivots by means of a bucket cylinder 306. The bucket cylinder 306 has a base end portion supported by the arm 302, and is freely movable in an extendable and retractable manner. Each of the boom cylinder 304, the arm cylinder 305, and the bucket cylinder 306 are constituted of a hydraulic cylinder.

### 1-3. Upper Swiveling Body 400

The upper swiveling body 400 is positioned over the lower traveling body 200, and is disposed in a swivel available manner via a swivel bearing (not illustrated) relative to the lower traveling body 200. The upper swiveling body 400 includes an operation section 401, a swivel frame 402, a swivel motor 403, and an engine room 404. By driving of the swivel motor 403 that is a hydraulic motor, the upper swiveling body 400 swivels via the swivel bearing.

A hydraulic pump 701 (see FIG. 2) is disposed in the upper swiveling body 400. The hydraulic pump 701 is driven by an electric motor 621 (see FIG. 2) inside the engine room 404. The hydraulic pump 701 supplies a hydraulic oil (pressure oil) to hydraulic motors (for example, the left and right traveling motors 202 and the swivel motor 403), and hydraulic cylinders (for example, the boom cylinder 304, the arm cylinder 305, and the bucket cylinder 306). The hydraulic motors and the hydraulic cylinders that are driven with hydraulic oil supplied from the hydraulic pump 701 are collectively referred to as hydraulic actuators 703 (see FIG. 2).

The driver's seat 4011 is disposed in the operation section 401. Various levers 4012 are arranged around the driver's seat 4011. The operator is seated on the driver's seat 4011 and operates the levers 4012, thereby driving the hydraulic actuator 703. This allows the lower traveling body 200 to travel, the work machine 300 to excavate, the upper swiveling body 400 to swivel, and the like.

A battery unit 611 is disposed in the upper swiveling body 400. The battery unit 611 is composed of, for example, a lithium-ion battery unit, and stores electric power for driving the electric motor 621. The battery unit 611 may be composed of a plurality of batteries as a unit, or may be composed of a single battery cell.

The upper swiveling body 400 further includes a lead battery 628. The lead battery 628 outputs a low direct-current voltage (e.g., 12 V). The output from the lead battery 628 is supplied, as a control voltage, to, for example, a system controller 627 (see FIG. 2), a drive portion of a fan 31 to be described below, and so on.

The upper swiveling body 400 has a power supply port which is not illustrated. The power supply port and a commercial power source 500, which is an external power source, are connected to each other via a power supply cable 501. Thus, the hydraulic excavator 100 can charge the battery unit 611 and the lead battery 628.

The hydraulic excavator 100 may be so configured as to be a combination of a hydraulic device, such as the hydraulic actuators 703, and an actuator driven by electric power. Examples of the actuator driven by electric power include an electric traveling motor, an electric cylinder, and an electric swivel motor.

### 1-4. Configuration of Electrical System and Hydraulic System

The hydraulic excavator 100 includes a plurality of electric devices 600. The plurality of electric devices 600 include a refrigerant cooling device 610 that is cooled by heat exchange with a refrigerant, and an air cooling device 620 that is cooled by an airflow. In this embodiment, the refrigerant cooling device 610 includes, for example, the battery unit 611. The refrigerant is water for cooling in this embodiment, but is not limited to this example, and may be a liquid other than water, or may be a gas for cooling, such as a non-fluorocarbon gas. The air cooling device 620 includes, for example, the electric motor 621, a charger 622, an inverter 623, a power drive unit (PDU) 624, a junction box 625, a DC-DC converter 626, the system controller 627, and the lead battery 628.

The electric motor 621 is driven by electric power supplied from the battery unit 611 via the junction box 625 and the inverter 623. The electric motor 621 is constituted by a permanent magnet motor or an induction motor. The electric motor 621 is disposed on the swivel frame 402. The plurality of hydraulic pumps 701 are connected to a rotation axis (output axis) of the electric motor 621. The plurality of hydraulic pumps 701 include a variable displacement pump and a fixed displacement pump. Note that the hydraulic pump 701 is illustrated as a single block in FIG. 2. However, the number of the hydraulic pumps 701 is not limited to the example illustrated in FIG. 2, and may be one or more. The hydraulic pump 701 is connected to a reservoir 705 via a hydraulic hose 704. The reservoir 705 is a hydraulic oil tank that contains (stores) hydraulic oil. When the hydraulic pump 701 is driven by the electric motor 621, a hydraulic oil in the reservoir 705 is supplied to the hydraulic actuator 703 via the control valve 702. Thus, the hydraulic actuator 703 is driven. The control valve 702 is a direction switching valve that controls a flow direction and a flow rate of hydraulic oil to be supplied to the hydraulic actuator 703. As described above, the hydraulic excavator 100 includes the hydraulic pump 701 that is driven by any one of the plurality of electric devices 600 (for example, the electric motor 621) and discharges the hydraulic oil.

The charger 622 is also referred to as a power feeder, and converts an AC voltage supplied from the commercial power source 500 (refer to FIG. 1) via the power supply cable 501 into a DC voltage. The inverter 623 converts a DC voltage supplied from the battery unit 611 into an AC voltage and supplies the AC voltage to the electric motor 621. The electric motor 621 is thus rotated. The supply of the AC voltage (current) from the inverter 623 to the electric motor 621 is performed based on a rotation command output from the system controller 627.

The PDU 624 is a battery control unit that controls an internal battery relay to control input and output of the battery unit 611.

The junction box 625 includes a charger relay, an inverter relay, and fuses. A voltage output from the above-mentioned charger 622 is supplied to the battery unit 611 via the junction box 625 and the PDU 624. The voltage output from the battery units 611 is supplied to the inverters 623 via the junction box 625 and the PDU 624.

The DC-DC converter 626 converts a high DC voltage (e.g., 300 V) supplied from the battery unit 611 via the junction box 625 to a low DC voltage (e.g., 12 V). The voltage output from the DC-DC converter 626 is supplied to the system controller 627, the drive portion of the fan 31, and the like, similarly to an output from the lead battery 628.

The system controller 627 is composed of an electronic control unit (ECU), and electrically controls the individual sections of the hydraulic excavator 100.

### 1-5. Internal Configuration of Engine Room 404

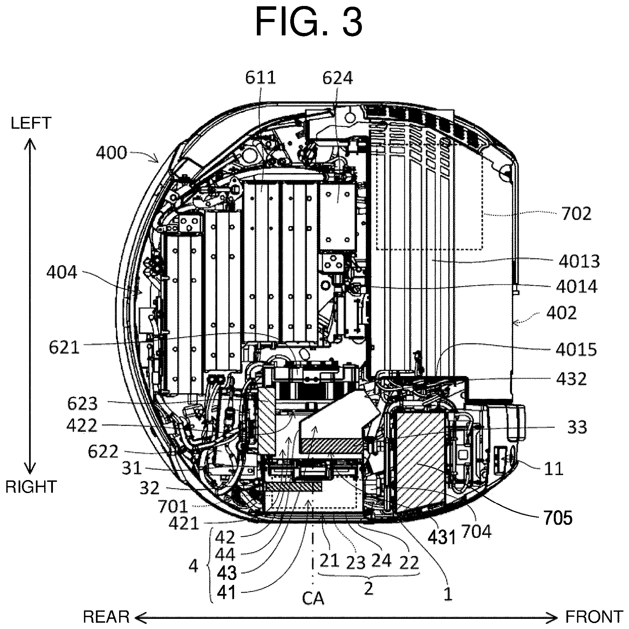

FIG. 3 is a cross-sectional view illustrating an internal configuration of the engine room 404 of the hydraulic excavator 100. Note that FIG. 3 illustrates a cross-sectional structure of the engine room 404 virtually cut along a plane that includes a two-dot chain line III-III in FIG. 1 and is perpendicular to the up-down direction.

The hydraulic excavator 100 further includes a hood 1, a ventilation portion 2, a duct 4, the fan 31, a radiator 32, and an oil cooler 33. The duct 4, the fan 31, the radiator 32, and the oil cooler 33 are housed in the engine room 404, as illustrated in FIG. 3.

The hood 1 is a housing that covers the engine room 404 together with a step 4013 and side wall portions 4014 and 4015 of the operation section 401, the swivel frame 402, and the like. In other words, the hood 1 is an outer wall of the engine room 404.

The hood 1 has an exhaust port 11. The exhaust port 11 is an opening portion formed in a portion of the hood 1 on the front side and the right side, and connects the inside and the outside of the engine room 404. In this embodiment, a portion of the outside air taken into the engine room 404 from the ventilation portion 2 through the duct 4 is discharged to the outside from the exhaust port 11.

The ventilation portion 2 is formed in the hood 1 and connects the inside and the outside of the engine room 404. A rotation of the fan 31 causes the outside air to be taken into the engine room 404 from the ventilation portion 2. The ventilation portion 2 is a circular recessed portion formed in the hood 1 and is recessed from the outer surface of the hood 1 toward the inside of the engine room 404. At least a portion of a bottom surface of the recessed portion (i.e., ventilation portion 2)) is configured to allow ventilation. In this embodiment, the ventilation portion 2 is formed in a right side portion of the hood 1. However, this example does not exclude a configuration in which the ventilation portion 2 is formed at a position other than the right side portion of the hood 1.

Thus, the strength of the ventilation portion 2 itself can be improved by an inner peripheral portion (an inner wall portion 22 described below) of a recessed portion recessed from the outer surface of the hood 1 while the ventilation portion 2 has a wide area for taking in the outside air. For example, when the hood 1 collides with an obstacle, even if a strong force acts on the ventilation portion 2, deformation of the ventilation portion 2 is suppressed or prevented, and thus influence on the intake of the outside air can be suppressed or prevented. Therefore, the hydraulic excavator 100 can efficiently take in air from the ventilation portion 2 having high durability.

The duct 4 is a flow passage portion through which the outside air taken in by the ventilation portion 2 flows. The duct 4 has a frame shape whose both ends in the left-right direction are open, and extends in the left-right direction. One end of the duct 4 is connected to the ventilation portion 2. The other end of the duct 4 (for example, a second opening portion 422 and a fourth opening portion 432 described below) opens into the engine room 404. The fan 31, the radiator 32, and the oil cooler 33 are disposed in the duct 4. Specifically, these are provided in the middle of the flow passage portion of the outside air in the duct 4. The inverter 623 and the like are attached to a portion (for example, a second flow passage portion 42 to be described below) of the duct 4 on the left side (that is, the downstream of the outside air) of the fan 31. A portion of the electric motor 621 and the hydraulic pump 701 are disposed below the duct 4. In addition, as illustrated in FIG. 34, the charger 622 is disposed on the rear side of the duct 4 and the hydraulic pump 701.

The fan 31 is disposed in the engine room 404 and takes in the outside air via the ventilation portion 2. The fan 31 is supported inside the duct 4 so as to be rotatable about a rotation axis CA extending in the left-right direction. The fan 31 of this embodiment is of a suction type. Therefore, when the fan 31 is rotated, the outside air passing through the ventilation portion 2 is sucked into the duct 4 and flows into the engine room 404.

The radiator 32 is an example of a "first heat exchanger" of the present invention, is disposed between the ventilation portion 2 and the fan 31, and cools a refrigerant by heat exchange with the outside air (air) taken in by the ventilation portion 2. The refrigerant to be cooled is for the electric device 600 in the engine room 404. For example, the refrigerant is supplied from the radiator 32 to the refrigerant cooling device 610, such as the battery unit 611, to cool the refrigerant cooling device 610.

As illustrated in FIG. 3, the radiator 32 is disposed on the right side (i.e., the ventilation portion 2 side) of the fan 31. That is, the radiator 32 is disposed on the upstream side of the fan 31 in a flow direction of the outside air sucked from the ventilation portion 2 by the rotation of the fan 31. Furthermore, the radiator 32 covers one side portion (for example, a rear side portion) of the fan 31 when viewed in the left-right direction.

For example, in this embodiment, on the upstream side of the outside air with respect to the fan 31, a rear portion of the fan 31 directly faces the radiator 32 in the left-right direction. A front portion of the fan 31 directly faces the ventilation portion 2 in the left-right direction. Note that the "rear portion" of the fan 31 is an example of a "first portion (of the fan)" of the present invention. The "front portion" of the fan 31 is an example of a "second portion (of the fan)" of the present invention. In other words, the radiator 32 faces a portion of the fan 31 on the rear side in the left-right direction, but does not face at least a portion of a front portion of the fan 31 in the left-right direction. With the above-described arrangement of the radiator 32, only a part of the outside air taken in from the ventilation portion 2 can be used for heat exchange in the radiator 32.

The oil cooler 33 is an example of the "second heat exchanger" of the present invention, and is connected to an oil passage through which oil circulates via the hydraulic pump 701, the hydraulic actuator 703 (see FIG. 2), and the like. The oil cooler 33 cools the hydraulic oil flowing through the above-described oil passage by heat exchange with the outside air (air) taken in by the ventilation portion 2.

As illustrated in FIG. 3, the oil cooler 33 is disposed on the left side of the fan 31 (that is, on the side opposite to the ventilation portion 2). That is, the oil cooler 33 is disposed on the downstream of the fan 31 in a flow direction of the outside air sucked from the ventilation portion 2. The oil cooler 33 is covered with the other side portion (for example, the front side portion) of the fan 31 when viewed in the left-right direction.

The oil cooler 33 is disposed between a portion (front side portion) of the fan 31 that directly faces the ventilation portion 2 and an inflow port (third opening portion 431 described below) of the outside air in a third flow passage portion 43 described below of the duct 4. For example, in this embodiment, on the downstream of the outside air with respect to the fan 31, the front portion of the fan 31 directly faces the oil cooler 33 in the left-right direction. The rear portion of the fan 31 directly faces a first opening portion 421 of a second flow passage portion 42 to be described below in the left-right direction. In other words, the oil cooler 33 faces a portion of the fan 31 on the front side in the left-right direction, but does not face at least a portion of the rear portion of the fan 31 in the left-right direction. With the above-described arrangement of the oil cooler 33, the other part of the outside air taken in from the ventilation portion 2 can be used for heat exchange in the oil cooler 33.

Furthermore, the above-described arrangement of the radiator 32 and the oil cooler 33 with respect to the fan 31 enables the hydraulic excavator 100 to divide the outside air taken into the engine room 404 into two air streams by the rotation of the single fan 31.

The one airflow hits the radiator 32 and then flows into the second flow passage portion 42, which will be described below, of the duct 4 via a portion on the rear side of the fan 31. Therefore, the radiator 32 can cool the refrigerant to be supplied to the refrigerant cooling device 610 by heat exchange with the one airflow described above.

The other airflow hits the oil cooler 33 via a portion on the front side of the fan 31 and then flows into the third flow passage portion 43, which will be described below, of the duct 4. Therefore, the oil cooler 33 can cool the hydraulic oil circulating in the oil passage via the hydraulic pump 701, the hydraulic actuator 703 (refer to FIG. 2), and the like by heat exchange with the other airflow described above.

Thus, in this embodiment, the outside air taken in by the ventilation portion 2 individually cools the radiator 32 and the oil cooler 33, and flows through the different flow passages (that is, the second flow passage portion 42 and the third flow passage portion 43). Thus, it is possible to suppress or prevent the above-described one airflow passing through the radiator 32 out of the outside air taken in from the ventilation portion 2 from hitting the oil cooler 33. Therefore, it is possible to suppress or prevent the airflow whose temperature has been increased by the heat exchange in the radiator 32 from hitting the oil cooler 33. The other airflow hits the oil cooler 33 without passing through the radiator 32. Therefore, the airflow having a temperature similar to that of the outside air can be applied to the oil cooler 33. Therefore, the oil cooler 33 can more effectively cool the hydraulic oil, that is, can further lower the temperature of the hydraulic oil by heat exchange with the above-described airflow. The cooling structure of the radiator 32 and the oil cooler 33 can be achieved with a more compact layout suitable for the small hydraulic excavator 100 as compared with a configuration in which fans for cooling are individually arranged in the radiator 32 and the oil cooler 33.

### 1-6. Configuration of Ventilation Portion 2

Next, a configuration of the ventilation portion 2 will be described.

The ventilation portion 2 has an opening portion 21, an inner wall portion 22, a plate portion 23, and a ventilation member 24.

The opening portion 21 is an end portion of the above-described recessed portion (that is, the ventilation portion 2) on the outer side and opens toward the outside of the engine room 404. Specifically, the opening portion 21 is formed in the outer surface of the hood 1, and is provided in a right side surface of the hood 1 in this embodiment. The opening portion 21 has a circular shape when viewed in the left-right direction, and has a perfect circular shape in this embodiment.

Preferably, an outer diameter of the opening portion 21 is equal to or more than an outer diameter of the fan 31. Thus, the rotation of the fan 31 enables a large amount of outside air to be smoothly taken into the engine room 404. However, this example does not exclude a configuration in which the outer diameter of the opening portion 21 is less than the outer diameter of the fan 31.

Furthermore, the opening portion 21 preferably overlaps with the fan 31 when viewed in the left-right direction, and more preferably has a circular shape centered on the rotation axis CA of the fan 31. Thus, the fan 31 can more smoothly take in the outside air.

The inner wall portion 22 is an inner wall portion of the above-described recessed portion (ventilation portion 2). An end portion (right end portion in FIG. 3) of the inner wall portion 22 on the outer side corresponds to an end portion of the above-described recessed portion (ventilation portion 2) on the outer side and also corresponds to an outer edge of the opening portion 21. An end portion (left end portion in FIG. 3) of the inner wall portion 22 on the inner side corresponds to an outer edge of the bottom surface of the above-described recessed portion (ventilation portion 2).

The inner wall portion 22 extends from the outer surface of the hood 1 toward the outer edge of the opening portion 21 and surrounds at least a portion of the outer edge of the opening portion 21. The strength of the ventilation portion 2 itself can be improved by the inner wall portion 22. Therefore, even when a strong force acts on the ventilation portion 2, deformation of the ventilation portion 2 can be suppressed or prevented.

Specifically, the inner wall portion 22 extends leftward (toward the inside of the engine room 404) from an edge portion of the hood 1 along the outer edge of the opening portion 21. In this embodiment, the inner wall portion 22 is a truncated cone-shaped plate member that extends toward the inner side of the opening portion 21 as it extends leftward, and is continuously provided over the entire outer edge of the opening portion 21. However, the present invention is not limited to this example, and the inner wall portion 22 may have a cylindrical shape extending leftward. Furthermore, the inner wall portion 22 may be provided to have one or more cuts in a portion of an entire periphery of the outer edge of the opening portion 21, and may have, for example, a C shape when viewed in the left-right direction.

The inner wall portion 22 has a circular inner end portion (left end portion in FIG. 3) and a circular outer end portion (right end portion in FIG. 3). Preferably, at least one of the end portions of the inner wall portion 22 in the left-right direction has a perfect circular shape. More preferably, as illustrated in FIG. 3, both the end portions of the inner wall portion 22 in the left-right direction have a perfect circular shape. However, this example does not exclude a configuration in which both the end portions of the inner wall portion 22 in the left-right direction do not have a perfect circular shape.

The plate portion 23 and the ventilation member 24 constitute the bottom surface of the above-described recessed portion (ventilation portion 2).

Specifically, the plate portion 23 is a member that covers a portion of the opening portion 21 and becomes wider from at least a portion of the end portion of the inner wall portion 22 on the inner side (the inner side of the engine room 404) toward the inner side of the opening portion 21. The rigidity of the ventilation portion 2 (particularly, the inner wall portion 22) can be improved by disposing the plate portion 23. For example, even when a force acts on the ventilation portion 2, the above-described recessed portion (the inner surface of the ventilation portion 2) (that is, the inner wall portion 22)) and the bottom surface (that is, the ventilation member 24 and the plate portion 23) is less likely to be deformed. Therefore, the deformation of the ventilation portion 2 can be suppressed or prevented.

In this embodiment, the plate portion 23 includes a pair of plate pieces 230 that are arranged to face each other in the up-down direction. Hereinafter, the plate piece 230 on the upper side may be referred to as an "upper plate portion 231", and the plate piece 230 on the lower side may be referred to as a "lower plate portion 232". That is, the plate portion 23 includes the upper plate portion 231 and the lower plate portion 232. The upper plate portion 231 extends and becomes wider downward from an upper portion of the outer periphery of the end portion of the inner wall portion 22 on the inner side. The lower plate portion 232 extends and becomes wider upward from a lower portion of the outer periphery of the end portion of the inner wall portion on the inner side. Inner edge portions of the respective plate pieces 230 (the upper plate portion 231 and the lower plate portion 232) are arranged in the up-down direction and extend parallel to the left-right direction.

However, the present invention is not limited to this example, and the pair of plate pieces 230 may be arranged to face each other in the left-right direction. In this case, the inner edge portions of the plate pieces 230 are arranged in the left-right direction and extend parallel to the up-down direction in this embodiment.

Since the inner edge portions of the plate pieces 230 extend in parallel to each other, a rectangular end portion of (a first flow passage portion 41, described below, of) the duct 4 can be easily connected. In addition, the outside air flowing through the vicinity of the inner edge portion of the plate pieces 230 can smoothly flow to the inner wall surface of the duct 4.

Preferably, a maximum up-down direction width of the upper plate portion 231 is smaller than a maximum up-down direction width of the lower plate portion 232. Thus, in a plan view of the ventilation portion 2, a center of the end portion of the duct 4 on the opening portion 21 side can be disposed above a center of the opening portion 21. That is, the duct 4 can be disposed at a higher position. Therefore, another component (for example, the hydraulic pump 701) can be disposed on a lower side of the duct 4. Therefore, the hydraulic excavator 100 can effectively utilize a space in the engine room 404, and the components housed in the engine room 404 can be compactly arranged. However, this example does not exclude a configuration in which the maximum up-down direction width of the upper plate portion 231 is equal to or more than the maximum up-down direction width of the lower plate portion 232.

The ventilation member 24 has air permeability and covers a remaining portion of the opening portion 21. The ventilation member 24 is disposed in a central portion in the up-down direction of the bottom surface of the above-described recessed portion (ventilation portion 2) in this embodiment.

However, the arrangement of the ventilation member 24 is not limited to this example. The ventilation member 24 is a net-like member in this embodiment, but is not limited to this example. For example, the ventilation member 24 may be any one of a member having a plurality of slits, a member having a plurality of through holes, a porous body, and the like.

In this embodiment, the plate portion 23 includes the two plate pieces 230 (the upper plate portion 231 and the lower plate portion 232). However, the number and arrangement of the plate pieces 230 are not limited to the above-described example. The number of the plate pieces 230 may be one or three or more. The plate pieces 230 may be provided in at least a portion of the end portion of the inner wall portion 22 on the inner side. Alternatively, the plate portion 23 may be provided over the entire circumference of the end portion of the inner wall portion 22 on the inner side. At this time, the ventilation member 24 is disposed inside the annular inner wall portion 22 in a plan view of the above-described ventilation portion 2.

Furthermore, the example of this embodiment does not exclude a configuration in which the ventilation portion 2 does not have at least one of the plate portion 23 and the ventilation member 24. That is, at least one of the plate portion 23 and the ventilation member 24 may be omitted.

### 1-7. Duct 4

Next, a configuration example of the duct 4 will be described. As illustrated in FIG. 3, the duct 4 of the hydraulic excavator 100 has the first flow passage portion 41, the second flow passage portion 42, and the third flow passage portion 43. The outside air taken in from the ventilation portion 2 and flowing toward the fan 31 flows in the first flow passage portion 41. One end of the first flow passage portion 41 is connected to the ventilation portion 2 and is connected to the outside of the hydraulic excavator 100 (particularly, the engine room 404) via the opening portion 21. In the other end of the first flow passage portion 41, the fan 31 is disposed.

A flow passage portion of the duct 4 on the left side of the fan 31 (a side opposite to the ventilation portion 2) is divided by a partition plate 44. Thus, the two flow passage portions are arranged in the front-rear direction. The second flow passage portion 42 is a flow passage portion on the rear side of the two flow passage portions, and an airflow that has passed through a portion on the rear side of the fan 31 flows through the second flow passage portion 42. The third flow passage portion 43 is a flow passage portion on the front side of the two flow passage portions, and the airflow that has passed through a portion on the front side of the fan 31 flows through the third flow passage portion 43.

The second flow passage portion 42 guides the outside air (airflow) having a relatively low temperature, which has undergone heat exchange in the radiator 32, to the air cooling device 620, such as the electric motor 621. The second flow passage portion 42 has a first opening portion 421 and a second opening portion 422. The first opening portion 421 is an end portion of the second flow passage portion 42 on the upstream of the outside air and opens to the right. The first opening portion 421 is connected to the other end side of the first flow passage portion 41 and faces a portion of the fan 31 on the rear side in the left-right direction. The second opening portion 422 is an end portion of the second flow passage portion 42 on the downstream of the outside air. Note that an upper surface of the second flow passage portion 42 is inclined downward toward the left side. Therefore, a portion of the second flow passage portion 42 on the left side is bent downward. As a result, the second opening portion 422 opens downward and faces the electric motor 621 in the up-down direction. Thus, the electric motor 621 can be cooled with a compact layout. A shape of the second flow passage portion 42 is not limited to the shape described above.

Thus, a portion of the outside air taken in from the opening portion 21 hits the radiator 32 that cools the refrigerant, such as water. The outside air becomes an airflow having a relatively low temperature by heat exchange with the radiator 32, and flows to the first opening portion 421 of the second flow passage portion 42 via the rear side portion of the fan 31. That is, the outside air deviates from the oil cooler 33 (that is, passes through the outside of the oil cooler 33) and flows into the second flow passage portion 42.

In this embodiment, a front portion of the inverter 623 is disposed on the side surface of the second flow passage portion 42 on the rear side. Thus, the inverter 623 can be efficiently air-cooled by the airflow having a relatively low temperature flowing inside the second flow passage portion 42.

In this embodiment, the second opening portion 422 faces the electric motor 621 in the up-down direction. Therefore, the airflow having a relatively low temperature flowing inside the second flow passage portion 42 is delivered from the second opening portion 422 toward the electric motor 621 and directly hits the electric motor 621. Thus, the cooling efficiency of the electric motor 621 is improved.

Furthermore, in this embodiment, some of the air cooling devices 620, such as the charger 622, are disposed around the second flow passage portion 42. The second opening portion 422 opens toward a space in which the electric device 600 is disposed, that is, is connected to the space. Therefore, the airflow having a relatively low temperature discharged from the second opening portion 422 can air-cool not only the electric motor 621 but also the other air cooling devices 620 (the charger 622, the rear portion of the inverters 623, the PDU 624, the junction box 625, the DC-DC converter 626, the system controller 627, and the like) and the refrigerant cooling device 610, such as the battery unit 611. Therefore, the cooling efficiency of the electric device 600 is further improved.

Furthermore, in this embodiment, the refrigerant cooling device 610 (particularly, the battery unit 611) is disposed in the vicinity of the second flow passage portion 42 (particularly, the second opening portion 422). Thus, in the hydraulic excavator 100, the refrigerant cooling device 610 and the plurality of air cooling devices 620 can be compactly arranged while being cooled. Therefore, the hydraulic excavator 100 can efficiently cool the electric device 600 while effectively utilizing the limited space in the engine room 404.

The third flow passage portion 43 guides the relatively high-temperature outside air (airflow) heat-exchanged by the oil cooler 33 to the exhaust port 11 formed in the hood 1. The third flow passage portion 43 has the third opening portion 431 and the fourth opening portion 432. The third opening portion 431 is an end portion of the third flow passage portion 43 on the upstream of the outside air, is aligned in the front-rear direction with the first opening portion 421 of the second flow passage portion 42 with the partition plate 44 interposed therebetween, and is open to the right. The third opening portion 431 is connected to the other end side of the first flow passage portion 41 and faces a portion of the fan 31 on the front side in the left-right direction. The fourth opening portion 432 is an end portion of the third flow passage portion 43 on the downstream of the outside air. The rear side surface of the third flow passage portion 43 (that is, the partition plate 44) is inclined forward toward the left side. Therefore, a portion of the third flow passage portion 43 on the left side is bent forward. As a result, the fourth opening portion 432 is opened forward. However, a shape of the third flow passage portion 43 is not limited to the shape described above.

Furthermore, the oil cooler 33 is disposed in the third flow passage portion 43. Note that, in this embodiment, as illustrated in FIG. 3, at least a portion of the oil cooler 33 is disposed in the third opening portion 431 (i.e., the upstream end portion of the third flow passage portion 43) and covers the third opening portion 431.

Thus, a remaining portion of the outside air taken in from the opening portion 21 deviates from the radiator 32 (that is, passes through the outer side of the radiator 32), passes through the opening portion 21 and the front side of the fan 31, and hits the oil cooler 33 that cools the hydraulic oil. The outside air becomes a relatively high-temperature airflow by heat exchange in the oil cooler 33, flows inside the third flow passage portion 43, and is discharged forward from the fourth opening portion 432.

The airflow discharged forward from the fourth opening portion 432 is discharged to the outside from, for example, the exhaust port 11 provided in a portion on the front side of the hood 1 without circulating in the engine room 404. Thus, a rise in an internal temperature of the engine room 404 can be suppressed, and a relatively high-temperature airflow can be suppressed or prevented from hitting the electric device 600.

However, the present invention is not limited to the above-described example, and the oil cooler 33 may be disposed in a portion away from the third opening portion 431 inside the third flow passage portion 43. Alternatively, the oil cooler 33 may cover either the third opening portion 431 or the fourth opening portion 432 outside the third flow passage portion 43, or may be disposed near either the third opening portion 431 or the fourth opening portion 432 outside the third flow passage portion 43.

### 2. Remarks

The embodiment of the present invention has been described above. It should be understood by those skilled in the art that the above-described embodiment is merely an example and various modifications can be made to a combination of components and processes thereof and are within the scope of the present invention.

For example, in the above-described embodiment, the hydraulic excavator 100, which is a construction machine, has been described as an example of the "work machine" of the present invention. However, this example does not exclude a configuration in which the present invention is applied to a work machine other than the hydraulic excavator 100.

For example, the "work machine" of the present invention may be another construction machine, such as a wheel loader, or may be an agricultural machine, such as a combine harvester or a tractor.

### 3. Overview

The above-described embodiment will be collectively described below.

For example, the work machine 100 disclosed in this specification is configured to comprise:
a hood 1 that surrounds a machine body 404;
a ventilation portion 2 that is provided in the hood 1 and connects an inside and an outside of the machine body 404; and
a fan 31 that is disposed in the machine body 404 and takes in outside air via the ventilation portion 2, wherein
the ventilation portion 2 is a circular recessed portion that is provided in the hood 1 and is recessed from an outer surface of the hood 1 toward the inside of the machine body 404, and
at least a portion of a bottom surface of the ventilation portion 2 allows ventilation (first configuration).

The work machine 100 according to the first configuration may be configured such that
the ventilation portion 2 includes
a circular opening portion 21, and
an inner wall portion 22 that extends from an outer surface of the hood 1 toward an outer edge of the opening portion 21 and surrounds at least a portion of the outer edge of the opening portion 21 (second configuration).

The work machine 100 according to the second configuration may be configured such that
the ventilation portion 2 further includes a plate portion 23 that covers a portion of the opening portion 21, and
the plate portion 23 extends and becomes wider from at least a portion of an end portion of the inner wall portion 22 on an inner side toward an inner side of the opening portion 21 (third configuration).

Furthermore, the work machine 100 according to the second configuration may be configured such that
the plate portion 23 includes a pair of plate pieces 230 that are arranged to face each other, and
inner edge portions of the respective plate pieces 230 extend in parallel in one of a front-rear direction and an up-down direction (fourth configuration).

The work machine 100 according to the third or fourth configuration may be configured such that
the plate portion 23 includes
   an upper plate portion 231 that extends and becomes wider from an upper portion of an outer periphery of an end portion of the inner wall portion 22 on an inner side, and
   a lower plate portion 232 that extends and becomes wider from a lower portion of the outer periphery of the end portion of the inner wall portion 22 on the inner side, and
a maximum up-down direction width of the upper plate portion 231 is smaller than a maximum up-down direction width of the lower plate portion 232 (fifth configuration).

The work machine 100 according to any one of the first to fifth configurations may be configured to comprise:
a first heat exchanger 32 disposed between the ventilation portion 2 and the fan 31, wherein
a first portion of the fan 31 directly faces the first heat exchanger 32, and
a second portion of the fan 31 directly faces the ventilation portion 2 (sixth configuration).

The work machine 100 according to the sixth configuration may be configured such that the first heat exchanger 32 cools a refrigerant for an electric device 600 in the machine body 404 with the outside air (seventh configuration).

The work machine 100 according to any one of the first to seventh configurations may be configured to comprise:
a second heat exchanger 33 that is disposed on a downstream of the outside air with respect to the fan 31; and
a flow passage portion 43 that guides the outside air heat-exchanged by the second heat exchanger 33 to an exhaust port 11 formed in the hood 1, wherein
the second heat exchanger 33 is disposed between a portion of the fan 31 that directly faces the ventilation portion 2 and an inflow port of the outside air in the flow passage portion 43 (eighth configuration).

The work machine 100 according to the eighth configuration may be configured such that the second heat exchanger 33 cools hydraulic oil with the outside air (ninth configuration).

### INDUSTRIAL APPLICABILITY

The present invention is applicable to work machines, such as construction machines and agricultural machines.

### REFERENCE SIGNS LIST

100 Hydraulic excavator (work machine)
200 Lower traveling body
201 Crawler
202 Traveling motor
230 Plate piece
231 Upper plate portion
232 Lower plate portion
300 Work machine
301 Boom
302 Arm
303 Bucket
304 Boom cylinder
305 Arm cylinder
306 Bucket cylinder
400 Upper swiveling body
401 Operation section
4011 Driver's seat
4012 Lever
4013 Step
4014, 4015 Side wall portion
402 Swivel frame
403 Swivel motor
404 Engine room (machine body)
500 Commercial power source
501 Power supply cable
600 Electric device
610 Refrigerant cooling device
611 Battery unit
620 Air cooling device
621 Electric motor
622 Charger
623 Inverter
624 PDU
625 Junction box
626 DC-DC converter
627 System controller
628 Lead battery
701 Hydraulic pump
702 Control valve
703 Hydraulic actuator
704 Hydraulic hose
705 Reservoir
1 Hood
11 Exhaust port
2 Ventilation portion
21 Opening portion
22 Inner wall portion
23 Plate portion
24 Ventilation member
31 Fan
32 Radiator (first heat exchanger)
33 Oil cooler (second heat exchanger)
4 Duct
41 First flow passage portion
42 Second flow passage portion
421 First opening portion
422 Second opening portion
43 Third flow passage portion (flow passage portion)
431 Third opening portion
432 Fourth opening portion
44 Partition plate
CA Rotation axis

## Claims

1. A work machine comprising:
a hood that surrounds a machine body;
a ventilation portion that is formed in the hood and connects an inside and an outside of the machine body; and
a fan that is disposed in the machine body and takes in outside air via the ventilation portion, wherein
the ventilation portion is a circular recessed portion that is provided in the hood and is recessed from an outer surface of the hood toward the inside of the machine body, and
at least a portion of a bottom surface of the ventilation portion allows ventilation.

2. The work machine according to claim 1, wherein
the ventilation portion includes
a circular opening portion, and
an inner wall portion that extends from an outer surface of the hood toward an outer edge of the opening portion and surrounds at least a portion of the outer edge of the opening portion.

3. The work machine according to claim 2, wherein
the ventilation portion further includes a plate portion that covers a portion of the opening portion, and
the plate portion extends and becomes wider from at least a portion of an end portion of the inner wall portion on an inner side toward an inner side of the opening portion.

4. The work machine according to claim 3, wherein
the plate portion includes a pair of plate pieces that are arranged to face each other, and
inner edge portions of the respective plate pieces extend in parallel in one of a front-rear direction and an up-down direction.

5. The work machine according to claim 3, wherein
the plate portion includes
an upper plate portion that extends and becomes wider from an upper portion of an outer periphery of an end portion of the inner wall portion on an inner side, and
a lower plate portion that extends and becomes wider from a lower portion of the outer periphery of the end portion of the inner wall portion on the inner side, and
a maximum up-down direction width of the upper plate portion is smaller than a maximum up-down direction width of the lower plate portion.

6. The work machine according to any one of claim 1 to claim 5, further comprising:
a first heat exchanger disposed between the ventilation portion and the fan, wherein
a first portion of the fan directly faces the first heat exchanger, and
a second portion of the fan directly faces the ventilation portion.

7. The work machine according to claim 6, wherein the first heat exchanger cools a refrigerant for an electric device in the machine body with the outside air.

8. The work machine according to any one of claim 1 to claim 5, further comprising:
a second heat exchanger that is disposed on a downstream of the outside air with respect to the fan; and
a flow passage portion that guides the outside air heat-exchanged by the second heat exchanger to an exhaust port formed in the hood, wherein
the second heat exchanger is disposed between a portion of the fan that directly faces the ventilation portion and an inflow port of the outside air in the flow passage portion.

9. The work machine according to claim 8, wherein the second heat exchanger cools hydraulic oil with the outside air.
